# NOUVEAU FASCICULE DE BREVET EUROPEEN

(11) **EP 1 007 578 B2**
(45) Date de publication et mention de la décision concernant l'opposition: **28.04.2010**
(45) Mention de la délivrance du brevet: 05.11.2003
(21) Numéro de dépôt: 98942791.9
(22) Date de dépôt: 27.08.1998
(51) Int. Cl.: C08F 265/06, C08F 279/02, C08F 291/02, C09D 151/04

(54) **FILM THERMOPLASTIQUE HYDROPHOBE**
THERMOPLASTISCHER HYDROPHOBER FILM
HYDROPHOBIC THERMOPLASTIC FILM

(30) Priorité: 28.08.1997 FR 9710762
(43) Date de publication de la demande: 14.06.2000
(73) Titulaire: Cray Valley S.A., 92400 Courbevoie (FR)
(72) Inventeur: DOMINGUES DOS SANTOS, Fabrice, F-75009 Paris (FR); DRUJON, Xavier, F-64290 Bosdarros (FR); FABRE, Pascale, F-75014 Paris (FR); LEIBLER, Ludwik, F-75016 Paris (FR); MEUNIER, Gilles, F-64230 Mazerolles (FR)
(74) Mandataire: Killis, Andréas
(86) Numéro de dépôt international: PCT/FR1998/001859
(87) Numéro de publication internationale: WO 1999/011681

(56) Documents cités:
- EP-A- 0 522 791
- EP-A- 0 609 756
- EP-A- 0 764 741
- EP-A- 0 795 568
- WO-A-94/04581
- DE-A- 4 139 382
- DE-B- 1 220 613
- FR-A- 2 729 150
- US-A- 4 714 671
- US-A- 5 500 457
- H.J. BUTT ET AL.: 'Surface Structure of Latex Films, Varnishes, and Paint Films studied with an Atomic Force Microscope' JOURNAL OF COATINGS TECHNOLOGY vol. 67, no. 848, Septembre 1995, pages 101 - 107

## Description

L'invention se rapporte au domaine de traitement de surface et en particulier aux films thermoplastiques hydrophobes pour revêtements de surface et plus particulièrement aux films obtenus par séchage à basse température d'un latex ne contenant ni composés organiques volatils ni agents de coalescence.

On entend par latex utilisé dans un film selon l'invention une dispersion aqueuse de particules de polymères telle qu'on peut l'obtenir par polymérisation en émulsion d'un ou de plusieurs monomères.

Beaucoup de latex sont destinés aux industries du bâtiment, du papier, du textile, du cuir et sont utilisés dans les traitements de surface de différents matériaux en particulier comme peinture, vernis, colle, mastic. D'une manière générale, il est demandé à de tels latex d'avoir une température minimum de filmification, désignée ci-après par TMF, la plus basse possible. La TMF est la plus basse température à laquelle les particules forment un film continu après évaporation de l'eau.

Lorsque les polymères constituant les particules en dispersion d'un latex ont une température de transition vitreuse, désignée par Tg, relativement basse, la filmification du latex à température ambiante est aisée mais les films obtenus sont collants et de tenue mécanique médiocre. En revanche, si les polymères ont une Tg élevée les films seront de meilleure qualité mais la filmification à température ambiante nécessiterait l'ajout d'un agent de coalescence. Ce dernier est généralement un composé organique volatil qui s'évapore lors de l'application et la formation du film, comme décrit dans USP 4 455 402 et USP 5 021 469.

Pour des raisons évidentes de respect de l'environnement et de réduction de coût, on cherche à mettre au point des latex ne contenant ni composés organiques volatils ni agents de coalescence, ayant une TMF relativement basse et pouvant donner à température ambiante des films sans collant superficiel et de bonne qualité mécanique.

Pour atteindre cet objectif, EP 466 409 propose une solution basée sur un mélange de deux latex, l'un à basse Tg généralement qualifié de "mou" apportant la filmification l'autre à haute Tg généralement qualifié de "dur" apportant la tenue mécanique. EP 609 756 décrit un latex préparé en deux étapes ayant un coeur "mou" de Tg allant de -5°C à -55°C et une écorce "dur" de Tg inférieur à 50°C.

De même FR 2 090 483 décrit un latex, obtenu par polymérisation en deux étapes, constitué de 35 à 50 % en poids d'un polymère obtenu dans le premier stade ayant une Tg inférieure à 10°C et de 50 à 65 % d'un polymère de Tg supérieure à 60°C obtenu dans le second stade, le polymère de premier stade étant réticulé et fixé au second.

La demanderesse a trouvé qu'une solution ingénieuse au problème décrit précédemment réside dans l'obtention d'un film hydrophobe en utilisant un latex contenant des particules de polymères hydrophobes structurés en coeur/écorce. Avec un coeur qualifié de "mou" ayant une Tg inférieure à 20°C et une écorce qualifiée de "dur" ayant une Tg supérieure à 50°C. En effet, la demanderesse a découvert que, à condition que la participation massique de l'écorce dans le poids total des particules de polymères n'excède pas 30 %, un tel latex appliqué sur une surface quelconque donne après séchage à basse température, et sans l'intervention d'agents de coalescence ni de composés organiques volatils, un film continu, structuré sous la forme de parties molles dispersées dans une matrice dure, homogène, sans collant superficiel et ayant une bonne tenue mécanique.

De manière générale, l'hydrophobie est la non solubilité dans l'eau ou bien l'absence d'affinité vis-à-vis de l'eau. Selon l'invention cette absence d'affinité peut être hiérarchisée. En effet l'hydrophobie selon l'invention est définie par le paramètre de solubilité (delta) tel que décrit dans "properties of polymers" de D.W. Van Krevelen, 1990 troisième édition p 220. Ce paramètre permet de classer les différents polymères selon leurs affinités vis-à-vis de l'eau. Selon l'invention un polymère est hydrophobe si son (delta) est inférieur à 26. De plus si (delta1) d'un polymère 1 est inférieur à (delta2) d'un polymère 2 alors 1 est plus hydrophobe que 2.

Un des objets de l'invention est un film thermoplastique hydrophobe constitué de 70 à 90 % en poids d'un polymère (P1) à caractère mou ayant une Tg inférieure à 20°C dispersé dans 10 à 30 % d'un polymère (P2) à caractère dur ayant une Tg supérieure à 50°C, avec le polymère P1 dispersé sous la forme de nodules individualisés dans la matrice constituée par le polymère P2, P1 et P2 ayant un paramètre de solubilité (δ) delta inférieur à 26 et P1 étant plus hydrophobe que P2.

De manière préférentielle, P1 a une Tg inférieure à 0°C et P2 une Tg supérieure à 60°C.

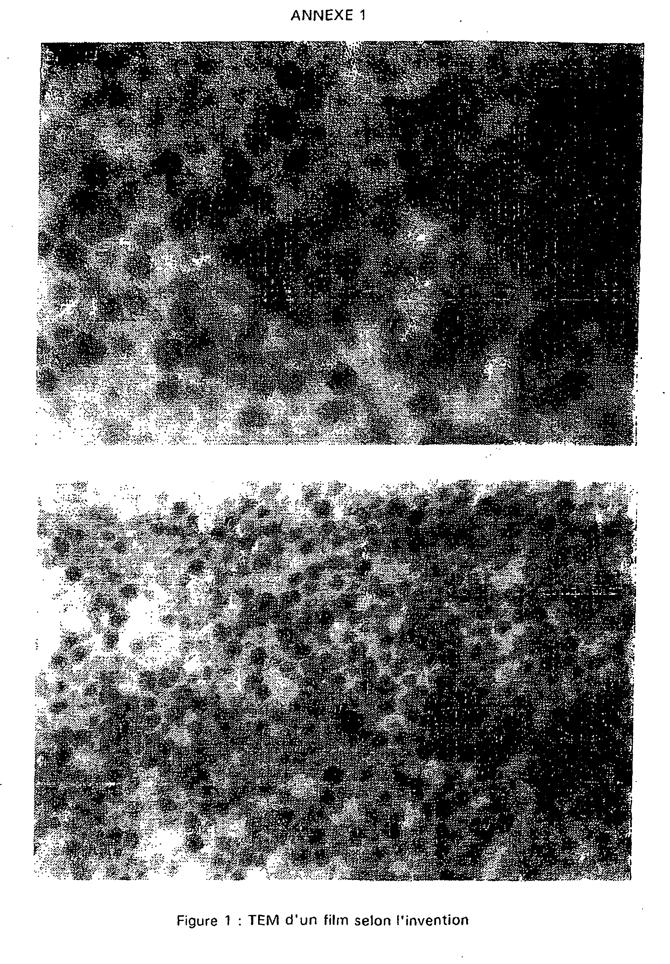

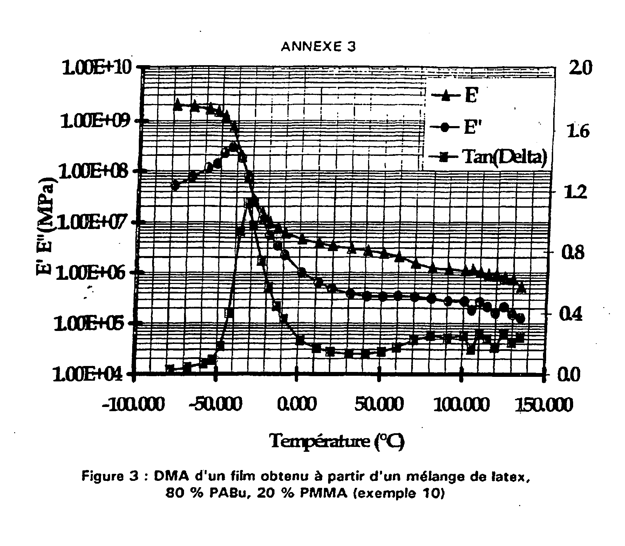

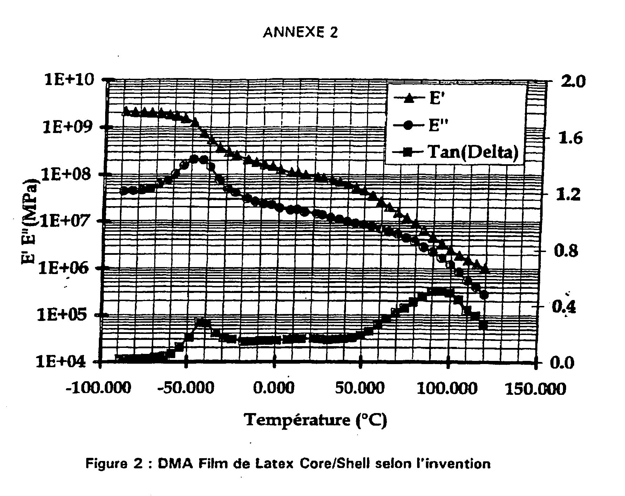

Le film de l'invention peut être caractérisé par deux techniques distinctes. La première est la microscopie électronique à transmission dont un exemple correspondant à l'invention est donné en figure 1. Une coupe de 80 nm d'épaisseur d'un film est marquée grâce à un réactif spécifique au polymère P1. Celui-ci apparaît en sombre tandis que le polymère P2 apparaît en clair. Sur la figure 1 on peut voir sans difficulté que la structure du film est bien celle décrite précédemment c'est-à-dire des nodules individualisés de P1 dispersés dans une matrice continue de P2. La seconde technique est l'analyse thermomécanique dynamique (DMA) dont un exemple correspondant au film précédemment décrit est donné en figure 2. Celle-ci montre que tangente delta présente deux pics caractéristiques de la présence de deux phases distinctes dans le matériau. D'autre part, la mesure d'un module d'Young,E' à température ambiante supérieure à 1E8 Pa montre que le film ne possède pas de collant superficiel et que compte tenu des proportions respectives en polymères P1 et P2 dans le film c'est le polymère P2 (dur) qui constitue la phase continue.

Les polymères formant les films de l'invention peuvent être préparés par polymérisation en émulsion en deux étapes comme décrit plus loin et sont constitués essentiellement de motifs dérivés par polymérisation de monomères choisis dans le groupe I constitué :
- des esters de l'acide (méth)acrylique en C1 -C8
- des esters vinyliques des acides carboxyliques linéaires ou branchés tels que l'acétate de vinyle , le stéarate de vinyle
- du styrène et ses dérivés tels que le chloro méthyl styrène, l'alpha méthyl styrène
- des diènes conjuguées telles que le butadiène, l'isoprène
- de l'acrylamide, méthacrylamide et acrylonitrile
- du chlorure de vinyle
- des acides (méth)acryliques et leurs dérivés, tels que les anhydrides.

La sélection de monomères tant pour le polymère mou que pour le polymère dur est conditionnée par les propriétés telles que l'hydrophobie, la Tg, qu'on souhaite conférer au polymère en question. Par exemple :
La Tg d'un polymère peut être estimée a priori par la loi de FOX 1/Tg = wa/Tg(a)+ wb/Tg(b)+....
où w(a) et w(b) sont les fractions massiques de monomères a et b, Tg(a) et Tg(b) sont les transitions vitreuses des homopolymères correspondants. Tg(a) et Tg(b) sont tirées de la littérature tel que le "Polymer handbook" 3ème édition, 1989.

Pour chaque polymère à préparer le monomère ou la nature et la composition du mélange de monomères quand il s'agit de plusieurs monomères sont déterminés de manière à obtenir la Tg souhaitée.

Ainsi, pour préparer le polymère à caractère "dur" le mélange de monomères à polymériser peut être constitué majoritairement d'au moins un monomère choisi dans le groupe constitué de : méthacrylate de méthyle, styrène et chlorure de vinyle.

De même pour le polymère à caractère "mou" le mélange de monomères peut être constitué majoritairement d'au moins un monomère choisi dans le groupe constitué de l'acrylate de butyle, le butadiène et l'isoprène.

Les parties molles et dures peuvent être réticulées par l'intermédiaire de monomères possédant au moins deux doubles liaisons copolymérisables. Ces monomères peuvent être choisis dans le groupe II constitué :
a) des esters allyliques d'acides carboxyliques ou dicarboxyliques alpha beta insaturés, comme l'acrylate d'allyle, le méthacrylate d'allyle ou le maléate de diallyle
b) des diacrylates ou diméthacrylates de diols comme le diméthacrylate d'éthylène glycol, le diméthacrylate de 1,3-butylène glycol, le diacrylate de 1,4-butanediol
c) des polyvinylbenzènes comme le divinylbenzène ou le trivinyl benzène
d) des polyallyliques comme le triallyl cyanurate ou le triallyl trimesate.

De préférence, seul le coeur est réticulé. Les monomères réticulants préférés selon l'invention sont le butadiène et le diacrylate de 1,4-butanediol. La teneur en monomères réticulants est comprise entre 0 et 10 % en poids du poids total des particules.

La partie "dure" peut être greffée sur la partie "molle" par l'introduction sur cette dernière de restes de motifs monomères. Ces restes de motifs monomères sont obtenus par l'incorporation dans la partie "molle" de monomères greffants choisis soit parmi le groupe des diènes conjugués, les restes de motifs monomères résultant de l'incorporation partielle en 1,2 du diène lors de la polymérisation, soit parmi le groupe II a) des esters allyliques d'acides carboxyliques ou dicarboxyliques alpha beta insaturés, qui possèdent deux fonctions copolymérisables de réactivité différentes.

Les monomères greffants préférés selon l'invention sont le butadiène, le méthacrylate d'allyle et le maléate de diallyle.

La teneur en monomères greffants est comprise entre 0 et 10 % en poids du poids total des particules.

Un des moyens d'obtention des films de l'invention est le séchage à basse température, à une température comprise entre 0 et 40°C et de préférence proche de 25°C, sans le concours ni d'agents de coalescence ni d'autres composés organiques volatils, d'un latex dont les particules sont stucturées en coeur/écorce.

Les latex comme moyens d'obtention desdits films selon l'invention sont préparés en deux étapes, par polymérisation en émulsion d'un mélange de monomères constitué :
de 90 % à 100 % en poids d'au moins un monomère choisi dans le groupe I, et
de 0 % à 10 % en poids d'au moins un monomère choisi dans le groupe II.

Les monomères préférés de l'invention sont :
pour P1, l'acrylate de butyle, l'acrylate d'éthyle, le butadiène, le méthacrylate de butyle, le méthacrylate de méthyle, parmi les monomères du groupe I, le butanédiol 1,4 diacrylate, l'éthylène glycol diacrylate, le diallyl maléate, et le méthacrylate d'allyle parmi les monomères du groupe II, et
pour P2, le méthacrylate de méthyle, le méthacrylate de butyle, l'acide méthacrylique parmi les monomères du groupe I, et aucun monomère du groupe II.

De manière générale les latex comme moyens d'obtention desdits films selon l'invention sont préparés par la polymérisation en émulsion en au moins deux étapes selon les techniques de polymérisation bien connues de l'homme du métier.

La composition du mélange de monomères à polymériser à chaque étape dépend du caractère qu'on souhaite donner au polymère formé dans cette étape (Tg, hydrophobie).

On prépare dans une première étape le polymère à caractère "mou" et à Tg inférieure à 20°C constituant le coeur des particules, ensuite on procède à la préparation du polymère à Tg supérieure à 50°C constituant l'écorce à caractère "dur".

A noter que, afin que les particules soient parfaitement structurées le mélange de monomères à polymériser pour former le coeur doit être plus hydrophobe que celui à polymèriser pour former l'écorce.

Pour chaque étape, la réaction de polymérisation est préférentiellement conduite sous atmosphère inerte en présence d'amorceurs radicalaires. Le système d'amorçage utilisé peut être un système oxydo-réducteur, un système thermique ou peroxydique tel que l'hydroperoxyde de tertio-butyle/(bisulfate de sodium) ou le di isopropyl benzène, les quantités utilisées étant comprises entre 0,2 et 1,0 % en poids par rapport à la masse totale des monomères, préférentiellement entre 0,25 et 0,5 % en poids.

La réaction de polymérisation en émulsion est menée à une température comprise entre 25 et 150°C et est fonction de la nature du système d'amorçage utilisé.

La préparation des latex comme moyens d'obtention desdits films selon l'invention est effectuée de préférence selon un procédé de type semi-continu permettant de limiter les dérives de composition qui sont fonction des différences de réactivité des différents monomères. L'introduction des monomères soit purs soit sous forme d'une préémulsion avec une partie de l'eau et des tensio-actifs est ainsi généralement réalisée sur une période de temps de 3 heures 30 à 5 heures. Il est également utile, bien que non indispensable, d'effectuer un ensemencement de 1 à 15 % des monomères. Les systèmes émulsifiants utilisés dans le procédé de polymérisation en émulsion comme moyens d'obtention desdits films selon l'invention sont choisis dans la gamme des émulsifiants possédant une balance hydrophile/lipophile adaptée. Les systèmes préférés sont constitués par l'association d'un tensio-actif anionique, tel que le laurylsulfate de sodium, les nonylphénol sulfates éthoxylés en particulier à 20 - 25 moles d'oxyde d'éthylène, le benzène dodécylsulfonate et les alcools gras éthoxylés sulfates, et d'un tensio-actif non ionique, tel que les nonylphénols éthoxylés en particulier à 10 - 40 moles d'oxyde d'éthylène et les alcools gras éthoxylés.

Les surfaces de matériaux tels que verre, cuir, bois, papier, métaux revêtues des films décrits selon l'invention, constituent un autre objet de l'invention.

De plus, et pour certaines applications, les matériaux traités en surface par les films de l'invention peuvent contenir du côté desdits films un autre matériau tel que verre, papier, cuir ou un film anti reflet, anti rayure ou anti ultra-violet.

Les exemples suivants illustrent l'invention sans la limiter.

### Exemple 1 : préparation d'un latex pour l'obtention d'un film selon l'invention

On opère dans un réacteur de 5 litres équipé d'un agitateur, d'une prise de température et d'une double enveloppe parcourue par un fluide caloporteur pour le maintien du réacteur en température.

Dans ce réacteur, maintenu à température ambiante, et sous agitation, on introduit après avoir effectué un dégazage à l'azote, 1500 g d'eau déminéralisée et 4.8 g de phosphate disodique, puis on dissout dans ce milieu 40.05 g de lauryl sulfate de sodium à titre d'agent émulsifiant.

On porte ensuite la température du contenu du réacteur à 57°C et, tout en maintenant cette température, on ajoute alors simultanément audit contenu 991.75 g d'acrylate de n-butyle et 9.2 g de diacrylate de butanediol-1,4.

On amène la température du réacteur à 66°C et on ajoute au milieu réactionnel 1.3 g de persulfate de potassium dissous dans 12.5 g d'eau et 0.925 g de bisulfite de sodium dissous dans 35 g d'eau.

Après un temps d'induction d'environ 15 minutes, la température s'élève à 107°C.

Après cet exotherme, on ajoute dans le réacteur maintenu à 80°C un mélange constitué de 98.9 g d'acrylate de n-butyle et 5.48 g de maléate de diallyle, puis 0.15 g de persulfate de potassium dissous dans 25 g d'eau. On maintient la température à 80°C pendant une heure. On obtient, avec une conversion de 97 % le noyau élastomérique constitué de particules de latex de diamètre Coulter 77 nm.

Au milieu réactionnel précédemment obtenu, maintenu à 80°C, on ajoute, sous agitation, 1 g de sulfoxylate formaldéhyde de sodium dans 5 g d'eau. On ajoute ensuite sur une période de une heure 279.9 g de méthacrylate de méthyle, et d'autre part 0.825 g de diisopropylbenzene hydroperoxide dans 275 g d'eau.

Le contenu du réacteur est maintenu à 80°C pendant 1,5 heure, après le début de l'addition de méthacrylate de méthyle, et on ajoute audit contenu 0.5 g d'hydroperoxide de tertiobutyle et 0.175 g de bisulfite de sodium dans 10 g d'eau.

Le mélange réactionnel est ensuite maintenu à 80°C pendant une heure. Au bout de cette durée, le contenu du réacteur est refroidi à température ambiante.

On obtient avec une conversion de 96,4 % un latex du copolymère greffé, dont le diamètre moyen de particule est de 85 nm et l'extrait sec de 39.9 %. L'analyse du polymère obtenu montre qu'il a 2 Tg, l'une située à -38°C, l'autre à 105°C.

### Exemples 2 et 3

On procède de la même manière qu'à l'exemple 1, sauf qu'on modifie la composition des monomères à polymériser à chaque étape de manière à modifier les Tg des copolymères préparés.

Les caractéristiques des particules des latex 2 et 3 des exemples 2 et 3 sont les suivantes :

| | |
|---|---|
| Latex 2 : (exemple 2 film selon l'invention) diamètre moyen des particules | 90 nm |
| Tg1 | -49°C |
| Tg2 | 100°C. |
| Latex 3 (exemple 3 pour film comparatif) diamètre moyen des particules : | 90 nm |
| Tg1 : | -44°C |
| Tg2 | 33°C. |

### Exemple 4 : Préparation d'un latex non stucturé (film comparatif)

Dans cet exemple le latex est non structuré car le polymère P2 est plus hydrophobe que P1.

On procède de la même manière qu'à l'exemple 1 sauf qu'on remplace le méthacrylate de méthyle par 279,9 g de styrène.

On obtient avec une conversion de 99 % un latex dont le diamètre moyen de particules est de 81 nm et l'extrait sec de 40,15 %.

### Exemple 5 : Préparation d'un mélange de deux latex, l'un à caractère mou l'autre à caractère dur (film comparatif)

### Préparation d'un latex à caractère mou le polyacrylate de butyle (PABu)

On opère dans un réacteur de 2 litres équipé d'un agitateur, d'une prise de température et d'une double enveloppe parcourue par un fluide caloporteur pour le maintien du réacteur à température.

Dans ce réacteur, maintenu à température ambiante, et sous agitation on introduit après avoir effectué un dégazage à l'azote, 750 g d'eau déminéralisée et 2,4 g de phosphate disodique, puis on dissout dans ce milieu 20,025 g de lauryl sulfate de sodium à titre d'agent émulsifiant.

On porte ensuite la température du contenu du réacteur à 57°C et, tout en maintenant cette température, on ajoute alors simultanément 495,9 g d'acrylate de n-butyle et 4,6 g de diacrylate de butanediol-1,4.

On amène la température du réacteur à 66°C et on ajoute au milieu réactionnel 0,4625 g de bisulfite de sodium dissous dans 15 g d'eau et 0,65 g de persulfate de sodium dissous dans 15 g d'eau.

Après un temps d'induction d'environ 15 minutes, la température s'élève à 114°C. Le mélange reactionnel est ensuite maintenu à 80°C pendant une heure. Au bout de cette durée, le contenu du réacteur est refroidi à température ambiante.

On obtient avec une conversion de 99 % un latex dont le diamètre moyen de particules est de 82 nm et l'extrait sec est de 36,90 %.

### Préparation d'un latex à caractère dur le polyméthacrylate de méthyle (PMMA)

On procède de la même manière que précédemment sauf qu'on remplace
750 g d'eau par 601 g
2,4 g de phosphate disodique par 1,76 g
20,025 g de lauryl sulfate de sodium par 14,7 g
495,9 g d'acrylate de n-butyle par 501,4 g de méthacrylate de méthyle
4,6 g de diacrylate de butanediol par 1,77 g de tetra dodecyl mercaptan
0,4625 g de bisulfite de sodium par 0,24 g
0,65 g de persulfate de potassium par 0,67 g.

On obtient avec une conversion de 99 % un latex dont le diamètre moyen est de 81 nm et l'extrait sec de 41,40 %.

Les deux latex obtenus sont alors mélangés de façon à avoir la composition finale 80 % en poids de polymère à caractère mou et 20 % en poids de polymère à caractère dur.

### Exemple 6 : Préparation de film.

Le latex issu de l'exemple 1 est appliqué en couches minces sur une plaque en verre et laissé sécher à température ambiante. Après évaporation de l'eau on obtient un film continu, homogène et sans collant superficiel. Ce film d'épaisseur de 300 µm est découpé en plaques rectangulaires de 20 mm de longueur et de 4 mm de largeur. Les plaques rectangulaires ont subi un test mécanique de traction à une vitesse de 10 mm par minute. Les résultats obtenus sont les suivants :
- module : 30 MPa
- contrainte au seuil : 0,7 MPa
- allongement à la rupture : 150 %

### Exemples 7, 8 ,9 et 10

On procède de la même manière que pour l'exemple 6 mais on remplace les latex de l'exemple 1 par ceux des exemples 2 ,3 ,4 et 5.

Les films obtenus ont subi le même test que précédemment. Les résultats obtenus sont :
pour l'exemple 7 (latex n° 2 pour film selon l'invention) :
   - film souple sans collant superficiel
   - module d'élasticité : 80 MPa
   - contrainte au seuil : 2 MPa
   - allongement à la rupture : 100 %
pour l'exemple 8 (latex n° 3 pour film comparatif) :
   - film souple ayant un collant superficiel
   - module d'élasticité : 3 MPa
   - contrainte au seuil : 0,45 MPa
   - allongement à la rupture : 300 %.
pour l'exemple 9 ( latex non structuré n°4 : film comparatif) :
   - film avec collant superficiel
   - module d'élasticité : 1 MPa
   - contrainte au seuil : 0,16 MPa
   - allongement à la rupture : 100 %
   - énergie à la rupture : 0,1mJ/mm3
pour l'exemple 10 ( mélange de latex n° 5 : film comparatif) :
   - module d'élasticité : 2 MPa
   - contrainte au seuil : 0,2 MPa
   - allongement à la rupture : 100 %
   - énergie à la rupture : 0,1mJ/mm3
   - E' inférieure à 1E+7 (annexe 3) indique la présence de collant superficiel.

## Revendications

1. Film thermoplastique hydrophobe n'ayant pas de collant superficiel constitué de 70 à 90% en poids d'un polymère (P1) à caractère mou ayant une Tg inférieure à 20°C dispersé dans 10 à 30% d'un polymère (P2) à caractère dur ayant une Tg supérieure à 50°C, **caractérisé en ce que** le polymère P1 est dispersé sous la forme de nodules individualisés dans la matrice constituée par le polymère P2, P1 et P2 ayant un paramètre de solubilité (δ) delta inférieur à 26 et P1 étant plus hydrophobe que P2.

2. Film selon la revendication 1 **caractérisé en ce que** P1 a une Tg inférieure à 0°C et P2 une Tg supérieure à 60°C.

3. Film selon l'une des revendications 1 ou 2 **caractérisé en ce que** P1 et P2 sont constitués de :
■ 90% à 100% en poids de motifs dérivés par polymérisation d'au moins un monomère choisi dans le groupe I constitué de :
des esters de l'acide (méth)acrylique en C1-C8,
- des esters vinyliques des acides carboxyliques linéaires ou branchés tels que l'acétate de vinyle, le stéarate de vinyle,
- du styrène et ses dérivés tels que le chloro méthyl styrène, l'alpha méthyl styrène,
- des diènes conjuguées telles que le butadiène, l'isoprène,
- de l'acrylamide, methacrylamide et acrylonitrile,
- du chlorure de vinyle,
- des acides (meth)acryliques et leurs dérivés, et
■ de 0% à 10% en poids de motifs dérivés par polymérisation d'au moins un monomère choisi dans le groupe II constitué de :
- des esters allyliques d'acides carboxyliques ou dicarboxyliques alpha, beta insaturés comme l'acrylate d'allyle, le méthacrylate d'allyle ou le maléate de diallyle,
- des diacrylates ou diméthacrylates de diols comme le diméthacrylate d'éthylène glycol, le diméthacrylate de 1,3 butylène glycol, le diacrylate de 1,4 butanediol,
- des polyvinylbenzènes comme le divinylbenzène ou le trivinyibenzène,
- des polyallyliques comme le triallyle cyanurate ou le triallyle trimesate.

4. Film selon la revendication 3 **caractérisé en ce que** les monomères préférés sont :
- pou P1, l'acrylate de butyle, l'acrylate d'éthyle, le butadiène, le méthacrylate de butyle, le méthacrylate de méthyle, parmi les monomères du groupe I, le butanediol-1,4 diacrylate, l'éthylène glycol diacrylate, le diallyl maléate, et le méthacrylate d'allyle parmi les monomères du groupe II, et
- pour P2, le méthacrylate de méthyle, le méthacrylate de butyle, l'acide méthacrylique parmi les monomères du groupe I, et aucun monomère du groupe II.

5. Surface telle que verre, cuir, métal, papier, bois, revêtue des films des revendications 1 à 4.

## Claims

1. Hydrophobic thermoplastic film having no surface tack, consisting of 70 to 90% by weight of a polymer (P1) with a soft character having a T_{g} of less than 20°C dispersed in 10 to 30% of a polymer (P2) with a hard character having a Tg of greater than 50°C, **characterized in that** the polymer P1 is dispersed in the form of individualized nodules in the matrix consisting of the polymer P2, P1 and P2 having a solubility parameter delta (δ) of less than 26 and P1 being more hydrophobic than P2.

2. Film according to Claim 1, **characterized in that** P1 has a Tg of less than 0°C and P2 has a T_{g} of greater than 60°C.

3. Film according to either of Claims 1 and 2, **characterized in that** P1 and P2 consist of:
■ 90% to 100% by weight of units derived from the polymerization of at least one monomer chosen from group I consisting of:
- C₁-C₈ (meth)acrylic acid esters;
- vinyl esters of linear or branched carboxylic acids, such as vinyl acetate and vinyl stearate;
- styrene and its derivatives, such as chloromethylstyrene, alpha-methylstyrene;
- conjugated dienes, such as butadiene and isoprene;
- acrylamide, methacrylamide and acrylonitrile;
- vinyl chloride;
- (meth)acrylic acids and their derivatives; and
■ 0% to 10% by weight of units derived from the polymerization of at least one monomer chosen from group II consisting of:
- allyl esters of unsaturated carboxylic or alpha, beta-dicarboxylic acids such as
allyl acrylate, allyl methacrylate or diallyl maleate;
- diol diacrylates or dimethacrylates, such as ethylene glycol dimethacrylate, 1,3-butylene glycol dimethacrylate and 1,4-butanediol diacrylate;
- polyvinylbenzenes, such as divinylbenzene or trivinylbenzene;
- polyallylics, such as triallyl cyanurate or triallyl trimesate.

4. Film according to Claim 3, **characterized in that** the preferred monomers are:
- in the case of P1, butyl acrylate, ethyl acrylate, butadiene, butyl methacrylate and methyl methacrylate, from the monomers of group I and 1,4-butanediol diacrylate, ethylene glycol diacrylate, diallyl maleate and allyl methacrylate from the monomers of group II; and
- in the case of P2, methyl methacrylate, butyl methacrylate and methacrylic acid from the monomers of group I, and no monomer from group II.

5. Surface, such as glass, leather, metal, paper or wood, coated with the films according to Claims 1 to 4.

## Patentansprüche

1. Thermoplastischer hydrophober Film ohne Oberflächenklebrigkeit, umfassend 70 bis 90 Gew.-% eines Polymers (P1) mit weichem Charakter mit einer Tg unterhalb von 20°C, dispergiert in 10 bis 30% eines Polymers (P2) mit hartem Charakter mit einer Tg oberhalb von 50°C, **dadurch gekennzeichnet, daß** das Polymer P1 in Form von einzelnen Knollen in der Matrix dispergiert ist, die aus dem Polymer P2 besteht, wobei P1 und P2 einen Löslichkeitsparameter (δ) Delta unterhalb von 26 aufweisen und P1 hydrophober als P2 ist.

2. Film nach Anspruch 1, **dadurch gekennzeichnet, daß** P1 eine Tg unterhalb von 0°C und P2 eine Tg oberhalb von 60°C aufweist.

3. Film nach einem der Ansprüche 1 oder 2, **dadurch gekennzeichnet, daß** P1 und P2 aus
■ 90 Gew.-% bis 100 Gew.-% von Einheiten, die abgeleitet sind durch Polymerisation mindestens eines Monomers, ausgewählt aus der Gruppe I von
- C1-C8-(Meth-)Acrylsäureestern,
- Vinylestern von linearen oder verzweigten Carbonsäuren, wie Vinylacetat und Vinylstearat,
- Styrol und seinen Derivaten, wie Chlormethylstyrol und α-Methylstyrol,
- konjugierten Dienen, wie Butadien und Isopren,
- Acrylamid, Methacrylamid und Acrylnitril,
- Vinylchlorid,
- (Meth-)Acrylsäuren und ihren Derivaten, und
■ 0 Gew.-% bis 10 Gew.-% von Einheiten, die abgeleitet sind durch Polymerisation mindestens eines Monomers, ausgewählt aus der Gruppe II von
- Allylestern von α,β-ungesättigten Carbonsäuren oder Dicarbonsäuren, wie Allylacrylaten, Allylmethacrylaten oder Diallylmaleaten,
- Diacrylaten oder Dimethacrylaten von Diolen, wie Ethylenglykoldimethacrylat, 1,3-Butylenglykoldimethacrylat und 1,4-Butandioldiacrylat,
- Polyvinylbenzolen, wie Divinylbenzol oder Trivinylbenzol,
- Polyallylverbindungen, wie Triallylcyanurat oder Triallyltrimesat,
bestehen.

4. Film nach Anspruch 3, **dadurch gekennzeichnet, daß** die bevorzugten Monomere:
- in bezug auf P1 Butylacrylat, Ethylacrylat, Butadien, Butylmethacrylat, Methylmethacrylat, unter den Monomeren der Gruppe I, 1,4-Butandioldiacrylat, Ethylenglykoldiacrylat, Diallylmaleat und Allylmethacrylat unter den Monomeren der Gruppe II, und
- in bezug auf P2 Methylmethacrylat, Butylmethacrylat, Methacrylsäure unter den Monomeren der Gruppe I und kein Monomer der Gruppe II sind.

5. Oberfläche, wie Glas, Leder, Metall, Papier oder Holz, beschichtet mit Filmen der Ansprüche 1 bis 4.
